# EUROPEAN PATENT APPLICATION

(11) **EP 3 395 183 A1**
(43) Date of publication of application: **31.10.2018**
(21) Application number: 17168794.0
(22) Date of filing: 28.04.2017
(51) Int. Cl.: A23L 3/37, A23L 3/375, F25D 3/10, F25D 3/12

(54) **COOLING APPARATUS FOR COOLING POURABLE ITEMS AND USE THEREOF**

(71) Applicant: Air Liquide Deutschland GmbH, 40235 Düsseldorf (DE); L'Air Liquide Société Anonyme pour l'Etude et l'Exploitation des Procédés Georges Claude, 75007 Paris (FR)
(72) Inventor: ANGENHEISTER, Alexander, 41460 Neuss (DE); MEYER, Dirk, 41352 Korschenbroich (DE); GOTTOWIK, Frank, 32130 Enger (DE); VOSS, Robert, 47829 Krefeld (DE)
(74) Representative: KNH Patentanwälte Neumann Heine Taruttis PartG mbB

(57) **Abstract**

Cooling apparatus (1) for cooling pourable items comprising at least a rotary tumbler (2) being rotatable around an axis (8), wherein a coolant can be introduced into the cooling apparatus (1) at least via at least one nozzle arrangement (3) comprising a plurality of nozzles (4) that are arranged at least partly annularly around the axis (8).

The cooling apparatus (1) is particularly suitable for cooling pourable items having a liquid component. In particular, food products with a liquid coating can be frozen with the cooling apparatus (1), wherein the liquid coating remains on the food products during cooling.

## Description

The present invention is directed to a cooling apparatus for cooling pourable items and to a use of such a cooling apparatus.

Various devices for cooling pourable items such as food products are known. According to some prior approaches, the pourable items can be cooled while being moved through a cylindrical tumbler. Thereby, a cooling effect can be obtained, e. g., with a refrigerant such as nitrogen or carbon dioxide. The refrigerant can be introduced into the tumbler either directly or, alternatively, through a perforated tumbler wall. In the latter case the refrigerant can evaporate or sublimate outside the tumbler. Fans can cause it to penetrate through the perforated wall into the tumbler. The motion of the pourable items through the tumbler along its axis can be achieved, e.g., with an auger inside the tumbler. Alternatively or additionally, the tumbler can be tilted. In that case, gravity can cause the items to move through the tumbler.

However, in particular for pourable items having a liquid component such as a liquid coating, a satisfying cooling effect cannot be obtained with known cooling devices. It is desired that the liquid component is frozen as quickly as possible so that the liquid component remains in or on the pourable items while the pourable items are moved through the rotary tumbler. If the liquid component is not frozen immediately after the pourable items are let into the rotary tumbler, the liquid component can be distributed through the rotary tumbler instead of remaining in or on the pourable items. In particular, this can reduce the quality of food products significantly.

It is, therefore, an object of the present invention to overcome at least in part the disadvantages known from prior art and in particular to provide a cooling apparatus that is particularly suitable for pourable items having a liquid component.

These objects are solved by the features of the independent claims. Dependent claims are directed to preferred embodiments of the present invention.

A cooling apparatus for cooling pourable items is provided comprising at least a rotary tumbler being rotatable around an axis, wherein a coolant can be introduced into the cooling device at least via at least one nozzle arrangement comprising a plurality of nozzles that are arranged at least partly annularly around the axis.

The cooling apparatus is preferably an installation for industrial mass production of food products. Any pourable items can be chilled, cooled and/or frozen using the cooling apparatus. In particular, heat-sensitive or perishable products can be treated with the cooling apparatus.

Pourable items are objects with a solid bulk. A multitude of pourable items can be processed simultaneously, in particular by the described cooling apparatus. Examples for pourable items are noodles, meat balls, fries or vegetables. The described cooling apparatus is particularly suited for freezing pourable food items having a liquid component such as a liquid coating. The liquid coating can be, for example, a sauce.

Cooling the pourable items is preferably performed by moving the pourable items through the rotary tumbler. The rotary tumbler preferably has a rotationally symmetric shape, in particular a cylindrical shape. At an inlet, which is preferably situated at a first front side of the cylinder, the pourable items can be introduced into the rotary tumbler. At an outlet, which is preferably situated at a second front side of the rotary tumbler being opposite to the first front side, the pourable items can be extracted from the rotary tumbler.

In the case of a cylindrical rotary tumbler, the axis is a cylinder axis as defined in a mathematical sense. In a preferred orientation of the rotary tumbler, the axis is oriented horizontally. Pourable items that are moved through the rotary tumbler along its axis can be cooled by the coolant. The coolant is preferably nitrogen and/or carbon dioxide. Hence, all elements that may be contacted by the coolant (or that can become cold otherwise during operation of the cooling apparatus) are preferably made with a material that can withstand the relevant low temperatures. In particular, the rotary tumbler is preferably made of a metal, in particular stainless steel. For example, liquid nitrogen has a temperature of 77 K [Kelvin] and liquid carbon dioxide of 194 K.

The pourable items can be cooled using the coolant. Therefor, the coolant can be provided in various ways. In particular, the coolant can be introduced into the cooling apparatus via the nozzle arrangement.Additional possibilities to introduce the coolant are providedin the following. Therein, the same or different coolants can be used for the different ways of introducing the coolant.

In particular, the coolant can be provided outside the rotary tumbler, preferably in its liquid state. The rotary tumbler can have a perforated circumferential wall or a closed circumferential wall. Also, the circumferential wall of the rotary tumbler can be perforated in part only, while the remainder of the circumferential wall is closed. In particular, the coolant can evaporate outside the rotary tumbler and penetrate through perforation openings of the circumferential wall. Preferably, the perforation openings are adapted to the size, the weight and/or other properties of the pourable items and/or the coolant. It is preferably ensured that the pourable items cannot pass the perforation openings. Also, the coolant can be provided outside the rotary tumbler such that an outer surface of a (perforated or closed) circumferential wall of the rotary tumbler is cooled. Thereby, also an inner surface of the circumferential wall and hence the pourable items can be cooled due to thermal conduction. Thermal conduction can be particularly pronounced if the circumferential wall is made with a metal such as steel. Further, the coolant can be injected into the rotary tumbler directly and evaporate within the rotary tumbler.

Besides these ways of providing the coolant, the coolant is at least introduced into the cooling apparatus via the at least one nozzle arrangement. The nozzle arrangement comprises the plurality of nozzles and can further comprise components such as conduits or frame elements to which the nozzles are attached. The nozzle arrangement preferably comprises at least one conduit, through which the coolant can flow to the nozzles. The conduit comprises preferably a plurality of openings that constitute the nozzles. Thereby, the nozzle arrangement can also be referred to as a spray bar. The cooling apparatus may comprise nozzles that are not part of the nozzle arrangement. However, in the following description, unless explicitly stated otherwise, only the nozzles of the nozzle arrangement are referred to by the term nozzle.

The nozzles are arranged at least partly annularly around the axis of the rotary tumbler. That is to be understood such that the nozzles are situated at a circle or ellipse that encloses the axis. Hence, the nozzles are preferably spaced apart from the axis. In particular, it is preferred that all nozzles are situated at the same distance from the axis. Also, it is preferred that the circle or ellipse on which the nozzles are arranged is oriented perpendicular to the axis. That is, a level in which the circle or ellipse is enclosed is preferably oriented perpendicular to the axis.

In particular, the nozzle arrangement is arranged such that the pourable items pass the nozzle arrangement when the pourable items are moved through the cooling apparatus. That is, the nozzle arrangement encloses a path for the pourable items through the cooling apparatus, e.g. the pourable items pass through a circle on which the nozzles are arranged.

The fact that the nozzles are arranged only at least partly in the described way means that the nozzles may span across only a part of the circumference of the rotary tumbler. That is, the nozzles can be arranged on only a fraction of a circle or ellipse, while there are no nozzles on the remaining part of the circle or ellipse. Such a case may alternatively be described by nozzles being are arranged at an entire circle or ellipse spanning the whole circumference of the rotary tumbler, wherein two of the nozzles are particularly spaced apart from each other in a circumferential direction.

Via the nozzle arrangement, the coolant can be introduced into the cooling apparatus. Therein, it is preferred that the coolant is introduced into the rotary tumbler. Alternatively or additional, it is preferred that the coolant is introduced into the cooling apparatus outside the rotary tumbler such that the coolant impinges an outer surface of the rotary tumbler. The coolant may also be introduced into the cooling apparatus outside the rotary tumbler and penetrate through a circumferential wall of the rotary tumbler.

In a preferred embodiment of the cooling apparatus at least one nozzle arrangement is situated inside the rotary tumbler.

In this embodiment, the coolant can be introduced into the rotary tumbler directly, that is without penetrating the circumferential wall of the rotary tumbler. This can result in a particularly efficient cooling.

In a further preferred embodiment of the cooling apparatus at least one nozzle arrangement is situated outside the rotary tumbler.

It is preferred that the circumferential wall of the rotary tumbler is perforated such that the coolant can be introduced into the rotary tumbler by penetrating the circumferential wall. It is particularly preferred that the circumferential wall is perforated at least in a spray area. The spray area is the surface of the circumferential wall of the rotary tumbler that can be impinged by the coolant ejected from the nozzles of the nozzle arrangement. That means that the circumferential wall of the rotary tumbler is preferably perforated at least in that area, where the coolant can be sprayed from the nozzle arrangement onto the circumferential wall. Hence, the coolant ejected from the nozzle arrangement can penetrate through the perforation openings in the circumferential wall.

Alternatively, it is also possible that the circumferential wall of the rotary tumbler is closed in the spray area. In that case the outer surface of the circumferential wall can be cooled by the coolant ejected from the nozzle arrangement. Thereby, the inner surface of the rotary tumbler and hence also the pourable items can be cooled due to thermal conduction.

Providing the nozzle arrangement outside the rotary tumbler can simplify the construction of the cooling apparatus. Also, in this case the nozzle arrangement is separated from the pourable items. Thus, the nozzle arrangement may not have to be cleaned after usage of the cooling apparatus. Also, hygienic requirements for the nozzle arrangement may be less strict if the nozzle arrangement does not come into contact with the pourable items.

There may be more than one nozzle arrangement. In that case, one or more of the nozzle arrangements can be situated inside the rotary tumbler, while the remaining one or more nozzle arrangements are situated outside the rotary tumbler. Also, all nozzle arrangements can be situated outside the rotary tumbler or all nozzle arrangements can be situated inside the rotary tumbler. However, it is preferred that there is only one nozzle arrangement as this allows both an easier construction and an easier control of the nozzle arrangement in use.

In a further preferred embodiment of the cooling apparatus the nozzles are equally distributed in a circumferential direction among the nozzle arrangement.

In this embodiment the (angular and/or circumferential) spacing between two adjacent nozzles is the same for all nozzles. Thereby, the spacing is measured along the nozzle arrangement. In case the nozzles are arranged on a circle or ellipse, the spacing between two adjacent nozzles is measured along the circle or ellipse, which is the circumferential direction.

With the nozzles being distributed equally as described, the nozzle arrangement can cause a particularly uniform cooling effect. In particular, the coolant can be introduced into the rotary tumbler or impinge the outer surface of the circumferential wall of the rotary tumbler equally from all sides.

This is particularly true for the preferred embodiment of the cooling apparatus, in which the nozzle arrangement spans across the whole circumference of the rotary tumbler. If the nozzles are arranged on a circle or ellipse, the fact that the nozzles span across the whole circumference of the rotary tumbler means that for all nozzles the spacing between two adjacent nozzles is less than a quarter of the circle or ellipse.

In a further preferred embodiment of the cooling apparatus at least a part of the nozzles is oriented such that a coolant can be ejected by the nozzles in a direction towards a center of the nozzle arrangement.

Preferably, all nozzles of the nozzle arrangement are oriented such that a coolant can be ejected by the nozzles in a direction towards a center of the nozzle arrangement.

If the nozzles of the nozzle arrangement are arranged on a circle or ellipse, the center of the circle or ellipse is the center of the nozzle arrangement.

With the nozzles spraying the coolant into a direction of the center of the nozzle arrangement, the coolant can impinge the pourable items when the pourable items are moved through the nozzle arrangement. This is at least true for those embodiments of the cooling apparatus, wherein the coolant impinges the pourable items directly, and wherein the coolant does not only impinge a closed surface of the circumferential wall.

In a further preferred embodiment of the cooling apparatus at least a part of the nozzles is oriented such that a coolant can be ejected by the nozzles parallel to the axis of the rotary tumbler.

Preferably, all nozzles of the nozzle arrangement are oriented such that a coolant can be ejected by the nozzles parallel to the axis of the rotary tumbler. Alternatively, it is preferred that only a part of the nozzles is oriented such that a coolant can be ejected by the nozzles in a direction towards a center of the nozzle arrangement, while the remaining nozzles are oriented such that a coolant can be ejected by the nozzles parallel to the axis of the rotary tumbler.

With the nozzles spraying the coolant parallel to the axis of the rotary tumbler the pourable items can be impinged with the coolant over a lager spatial area compared to the case where the nozzles are oriented such that a coolant can be ejected by the nozzles in a direction towards a center of the nozzle arrangement. That means that in the present embodiment the pourable items do not only pass a curtain of the coolant, but an extended volume, in which the coolant can impinge the pourable items. This can extend the time the pourable items are exposed to the coolant ejected by the nozzle arrangement allowing an accurate control of the heat transfer from the pourable items. In particular if the pourable items are moved through the cooling apparatus at a particularly high speed, the pourable items thus can be impinged by the coolant over a time sufficiently long to freeze, for example, a liquid coating on the pourable items.

In a further preferred embodiment of the cooling apparatus at least a part of the nozzles is oriented such that a coolant can be ejected by the nozzles obliquely to the axis of the rotary tumbler.

Preferably, all nozzles of the nozzle arrangement are oriented such that a coolant can be ejected by the nozzles obliquely to the axis of the rotary tumbler. Alternatively, it is preferred that only a part of the nozzles is oriented such that a coolant can be ejected by the nozzles obliquely to the axis of the rotary tumbler, while the remaining nozzles are oriented such that a coolant can be ejected by the nozzles in a direction towards a center of the nozzle arrangement and/or such that a coolant can be ejected by the nozzles parallel to the axis of the rotary tumbler.

The fact that the nozzles are arranged obliquely to the axis of the rotary tumbler means that the nozzles are arranged in an intermediate orientation between being oriented towards the center of the nozzle arrangement and being oriented parallel to the axis of the rotary tumbler. Thus, with this embodiment the advantages of the two respective previously described embodiments can be obtained in combination.

In a further preferred embodiment of the cooling apparatus the coolant can be ejected by each nozzle within an ejection cone having an opening angle in the range of 30° to 160° [degrees].

With the nozzles spraying the coolant not merely in a narrow line but within an ejection cone, the volume in which the pourable items can be impinged by the coolant is extended. Hence, the pourable items can be cooled by the coolant particularly effectively.

In a further preferred embodiment of the cooling apparatus the nozzle arrangement is situated at an inlet of the rotary tumbler.

Once the pourable items are introduced into the rotary tumbler, the movement of the pourable items through the rotary tumbler can cause a liquid component of the pourable items to be removed from the pourable items. Hence, it is preferred to freeze the liquid component as soon as possible after introduction of the pourable items into the rotary tumbler. That can be achieved if the nozzle arrangement is situated at the inlet of the rotary tumbler. This is to be understood such that the nozzle arrangement is situated within a distance of an inlet opening of the rotary tumbler that is less than 20 % [percent] of an overall length of the rotary tumbler, in particular less than 10 % [percent] of an overall length of the rotary tumbler.

As a further aspect a use of the described cooling apparatus for freezing food products having a liquid component is provided.

The details and advantages disclosed for the cooling apparatus according to the present invention can be applied to the method of the invention, and vice versa.

It should be noted that the individual features specified in the claims may be combined with one another in any desired technological reasonable manner and form further embodiments of the invention. The specification, in particular in connection with the figures, explains the invention further and specifies particularly preferred embodiments of the invention. Particularly preferred variants of the invention and also the technical field will now be explained in more detail on the basis of the enclosed figures. It should be noted that the exemplary embodiments shown in the figures are not intended to restrict the invention. The figures are schematic and may not be to scale. The figures display:
- Fig. 1:: a cross sectional side view of a first example embodiment of a cooling apparatus for cooling pourable items,
- Fig. 2:: a cross sectional front view of the cooling apparatus of fig. 1,
- Fig. 3:: a cross sectional side view of a second example embodiment of a cooling apparatus for cooling pourable items, and
- Fig. 4:: a cross sectional front view of the cooling apparatus of fig. 3.

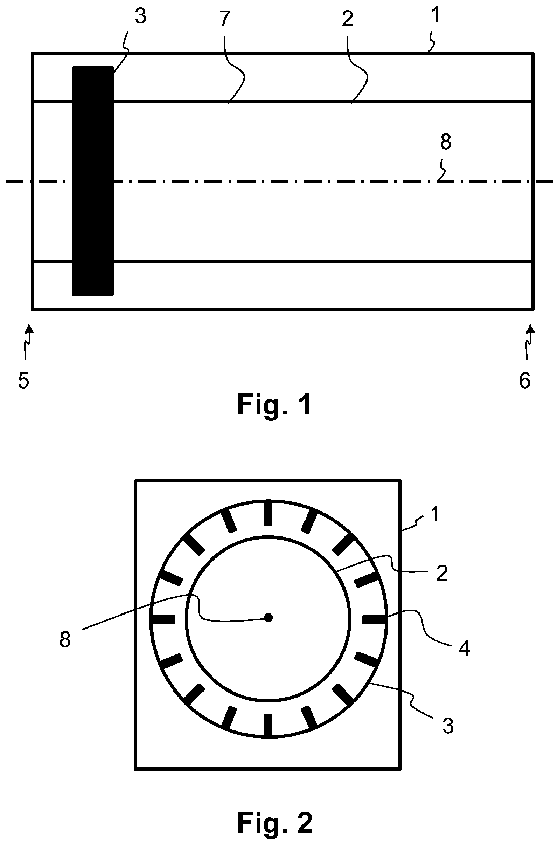

Fig. 1 shows a cross sectional side view of a first example embodiment of a cooling apparatus 1 for cooling pourable items. The cooling apparatus 1 is particularly suitable for freezing food products having a liquid component. The cooling apparatus comprises a rotary tumbler 2 with a circumferential wall 7, which is rotatable around an axis 8. A coolant can be introduced into the rotary tumbler 2 via a nozzle arrangement 3 comprising a plurality of nozzles 4 (which are shown in fig. 2) that are arranged annularly around the axis 8. Further, the coolant may also be introduced into the cooling apparatus 1 by other means, which are not shown here. The nozzle arrangement 3 is situated outside the rotary tumbler 2. The rotary tumbler 2 comprises an inlet 5 and an outlet 6 for the pourable items. The nozzle arrangement 3 is situated at the inlet 5 of the rotary tumbler 2.

In fig. 2 a cross sectional front view of the cooling apparatus 1 of fig. 1 is shown. As can be seen here, the nozzle arrangement 3 spans across the whole circumference of the rotary tumbler 2, wherein the nozzles 4 are equally distributed in a circumferential direction among the nozzle arrangement 3. The nozzles 4 are arranged on a circle, the center of which is situated on the axis 8. Also, the nozzles 4 are oriented such that a coolant can be ejected by the nozzles 4 in a direction towards a center of the nozzle arrangement 3.

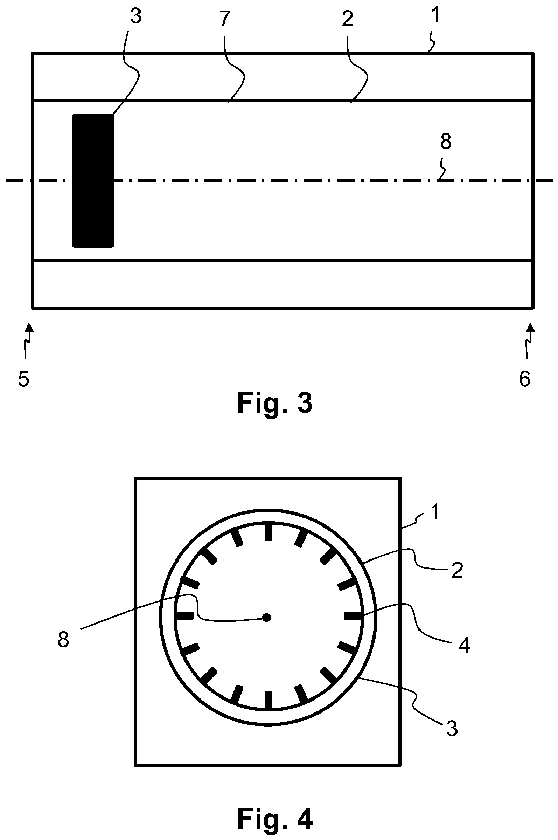

Fig. 3 and 4 show a cross sectional side view and a cross sectional front view of a second example embodiment of a cooling apparatus for cooling pourable items. In contrast to the first example embodiment shown in fig. 1 and 2, here the nozzle arrangement 3 is situated inside the rotary tumbler 2. Apart from that, it can be referred to the description of fig. 1 and 2.

The cooling apparatus 1 is particularly suitable for cooling pourable items having a liquid component. In particular, food products with a liquid coating can be frozen with the cooling apparatus 1, wherein the liquid coating remains on the food products during cooling.

### List of reference numerals

- 1: cooling apparatus
- 2: rotary tumbler
- 3: nozzle arrangement
- 4: nozzle
- 5: inlet
- 6: outlet
- 7: circumferential wall
- 8: axis

## Claims

1. Cooling apparatus (1) for cooling pourable items comprising at least a rotary tumbler (2) being rotatable around an axis (8), wherein a coolant can be introduced into the cooling apparatus (1) at least via at least one nozzle arrangement (3) comprising a plurality of nozzles (4) that are arranged at least partly annularly around the axis (8).

2. Cooling apparatus (1) according to claim 1, wherein at least one nozzle arrangement (3) is situated inside the rotary tumbler (2).

3. Cooling apparatus (1) according to one of the preceding claims, wherein at least one nozzle arrangement (3) is situated outside the rotary tumbler (2).

4. Cooling apparatus (1) according to one of the preceding claims, wherein the nozzle arrangement (3) spans across the whole circumference of the rotary tumbler (2).

5. Cooling apparatus (1) according to one of the preceding claims, wherein the nozzles (4) are equally distributed in a circumferential direction among the nozzle arrangement (3).

6. Cooling apparatus (1) according to one of the preceding claims, wherein at least a part of the nozzles (4) is oriented such that a coolant can be ejected by the nozzles (4) in a direction towards a center of the nozzle arrangement (3).

7. Cooling apparatus (1) according to one of the preceding claims, wherein at least a part of the nozzles (4) is oriented such that a coolant can be ejected by the nozzles (4) parallel to the axis (8) of the rotary tumbler (2).

8. Cooling apparatus (1) according to one of the preceding claims, wherein at least a part of the nozzles (4) is oriented such that a coolant can be ejected by the nozzles (4) obliquely to the axis (8) of the rotary tumbler (2).

9. Cooling apparatus (1) according to one of the preceding claims, wherein the coolant can be ejected by each nozzle (4) within an ejection cone having an opening angle in the range of 30° to 160° [degrees].

10. Cooling apparatus (1) according to one of the preceding claims, wherein the nozzle arrangement (3) is situated at an inlet (5) of the rotary tumbler (2).

11. Use of a cooling apparatus (1) according to one of the preceding claims for freezing food products having a liquid component.
